# EUROPEAN PATENT SPECIFICATION

(11) **EP 0 928 146 B1**
(45) Date of publication and mention of the grant of the patent: **07.01.2004**
(21) Application number: 97949367.3
(22) Date of filing: 03.11.1997
(51) Int. Cl.: A47C 27/08, A47C 27/10, A47C 7/02

(54) **MOTORCYCLE SEAT CUSHION**
SITZKISSEN FÜR MOTORRAD
COUSSIN DE SIEGE POUR MOTOCYCLETTE

(30) Priority: 02.01.1997 US 778303
(43) Date of publication of application: 14.07.1999
(73) Proprietor: Graebe, Robert H., Belleville, IL 62223 (US)
(72) Inventor: GRAEBE, Robert, H., Belleville, IL 62223 (US); FAIST, Stephen, E., Swansea, IL 62226 (US)
(74) Representative: Schmitz, Jean-Marie
(86) International application number: PCT/US1997/020183
(87) International publication number: WO 1998/029010

(56) References cited:
- GB-A- 420 292
- US-A- 2 343 996
- US-A- 2 577 274
- US-A- 3 253 861
- US-A- 3 296 635
- US-A- 3 503 084
- US-A- 4 698 864
- US-A- 4 779 924
- US-A- 4 864 671
- US-A- 5 052 068
- US-A- 5 111 544
- US-A- 5 152 023
- US-A- 5 369 828
- US-A- 5 561 875
- US-A- 5 634 685

## Description

### Technical Field

This invention relates to motorcycle seat cushions and more particularly to a free standing pad which can be placed on existing motorcycle seats and which can be removed and carried with the user, but which remain firmly anchored in position on the seat when in use.

Motorcycles are generally provided with seats for either a single person, called a "solo" seat or a "dual" seat for both the rider and a passenger. When dual seats are provided, the passenger seat is positioned behind the rider's seat and extends over the front portion of the rear fender. When solo seats are employed, the rear fender remains generally uncovered.

The removable motorcycle seat cushion of this invention can be positioned on either a solo or dual seat cycle.

### Background Art

Many motorcycle owners use their bikes for long distance travel often over back roads which are not smooth and tend to give the user and/or the passenger a bumping bouncy ride with much vibration. This is known to result in stiffness and soreness in the user, accompanied by lower back pain, hemorrhoidal irritation and extreme fatigue, and gathering of the undergarments ("wedgies"). There are a number of products on the market which strive to obviate these problems. These include covers for seats made of sheepskin sold as MUSTANG WOOLEES; replacement seats with inflatable air chambers sold as MUSTANG AIRLIFT SEAT seats; an inflatable pad known as POCKET P-PAD sold by XZOTIC Cycle Products; gel filled pads such as BUTT BUFFER sold by Warner Associates and SADDLE GEL sold by Travelcade; and spongy foam seats sold as JET STREAM and WIND TUNNEL by Wind-Tech Engineering.

US-A-5,111,544 describes a cover for a seat cushion having a rectangular base and air cells projecting upwardly from the base to form an array of air cells. The cover comprises a top panel located over the upper ends of the cells and being formed from an elastic fabric, a bottom panel located under the base and covering substantially the entire base, said bottom panel being formed from a high friction material, and a side panel located between and connected to the top and bottom panels at the peripheral margins of the top and bottom panel. The side panel is formed from a flexible fabric, with a portion of the side panel divided into sections which are normally joined, but which may be detached to permit the cover to be removed from or fitted over the cushion.

In US-A-5,369,828 a seat cushion is described with a flexible modular air cell pad that has a flexible base and a series of upstanding air cells with side walls and a top surface. The air cells have flexible generally vertical side walls sealed to the bottom wall. The air cells are substantially frusto-pyramidal in shape, and have a substantially rectangularly shaped lower section defined by said flexible generally vertical side walls, and a frusto-pyramidal tapered upper section formed from side panels connected to the vertical side walls. The vertical side walls of adjacent cells are separated and spaced apart defining lateral and longitudinal paths and are independently upstanding when inflated. The pneumatically interconnected air cells are formed in lateral transverse rows. Also, a cover comprises a top panel formed from an elastic fabric located over the upper ends of the cells, a bottom panel located under the base and covering substantially the entire base, a side panel located between and connected to the top and bottom panels at the peripheral margins of the top and bottom panel. The side panel is formed from a flexible fabric, with a portion of the side panel being divided into sections which are normally joined, but which may be detached to permit the cover to be removed from or fitted over the pad. The bottom panel is formed from a material with a higher coefficient of friction than top panel or side panel.

These all differ from the present invention which uses the unique DRY FLOATATION wheelchair cushion and therapeutic mattress technology of Roho, Inc. to provide a cushion which reduces fatigue and related problems in long, often bumpy motorcycle journeys.

It is a principal object of this invention to provide a new and improved motorcycle seat cushion and, in particular to provide a cushion usable with both solo and dual seat cycles. It is another object to provide a motorcycle seat which, although stable and firmly fixed in use, can be carried intact with the user when leaving the cycle.

A further object is to provide a motorcycle seat cushion which can be placed on the seats of existing cycles without their modification and which comprises an air cell pad formed with interconnected upstanding flexible air cells and a cover which has a smooth top surface to facilitate user transfer on and off the cushion and a friction generating bottom surface which retains the cushion in a predetermined position on the seat of the motorcycle.

These and other objects and advantages of the present invention will become more apparent from the detailed description thereof taken with the accompanying drawings.

In general terms, the invention comprises a motorcycle seat cushion for mounting on the seats of existing motorcycles without special mounting arrangements. The cushion comprises an air pad encased in a cover having a smooth relatively friction-free seating area and a friction generating under surface to fix the cushion on the seat of the motorcycle. The air pad comprises a series of upstanding interconnected air cells to isolate the anatomy of the user from vibration and shock and to provide uniform forces against that portion of the user's anatomy which rests on the cushion.

### Brief Description of Drawings

In the drawings where like numbers refer to like parts wherever the occur,
Figure 1 is a side elevational view of a motorcycle with the cushion of this invention placed on the seat thereof;
Figure 2 is a front, top, right side perspective view of the motorcycle seat of this invention;
Figure 3 is a front, top, right side perspective view of the air pad component of this invention;
Figure 4 is a fragmentary sectional view taken along line 4-4 of Figure 3;
Figure 5 is a bottom view of the cushion of this invention;
Figure 6 is a side elevational view;
Figure 7 is a rear elevational view;
Figure 8 is a top plan view of the air cell shown in Figure 3;
Figure 9 is a right side elevational view of the air pad of Figure 8;
Figure 10 is a rear elevational view of the air pad of Figure 8;
Figure 11 is a vertical sectional view taken along line 11-11 of Figure 5;
Figure 12 is a vertical sectional view taken along line 12-12 of Figure 8;
Figure 13 is a vertical sectional view taken along line 13-13 of Figure 8;
Figure 14 is an enlarged fragmentary plan view of the back wall of the cover of the composite cushion of this invention;
Figure 15 is a vertical sectional view of a portion of the cover back wall shown in Figure 14;
Figure 16 is a plan view of the bottom wall of the air pad shown in Figure 3;
Fig. 17 is a plan view of a modification of the air pad; and
Fig. 18 is a right side elevational view of the air pad shown in Fig. 17.

As noted, corresponding reference numerals will be used throughout the several figures of the drawings.

### Best Mode for Carrying Out the Invention

The following detailed description illustrates the invention by way of example and not by way of limitation. This description will clearly enable one skilled in the art to make and use the invention, and describes several embodiments, adaptations, variations, alternatives and uses of the invention, including what we presently believe is the best mode of carrying out the invention.

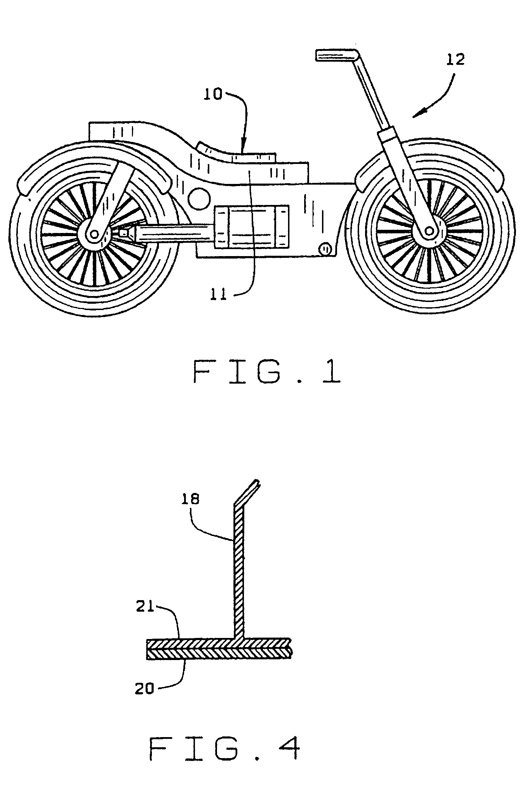

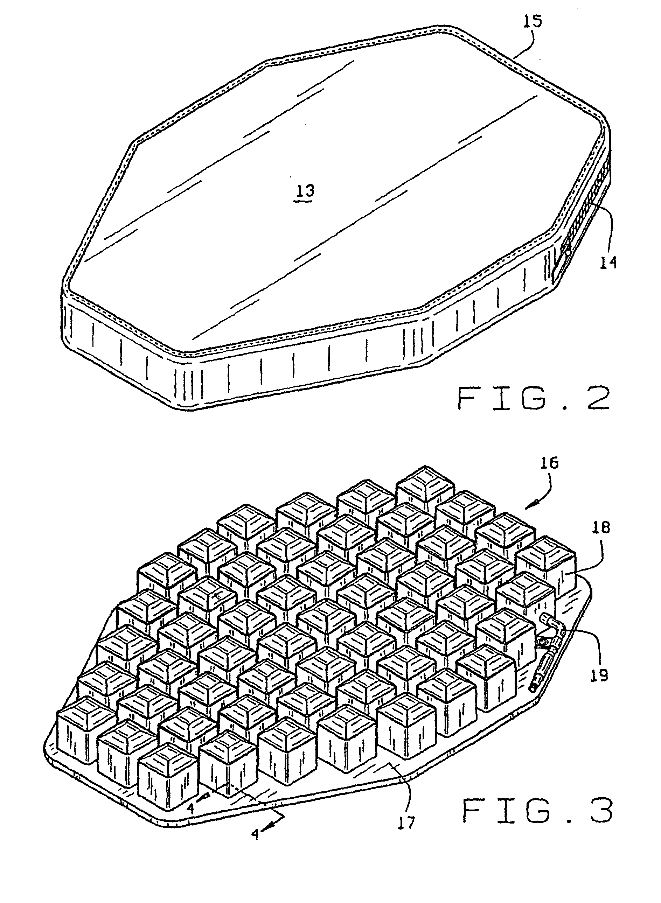

Fig. 1 shows an elevational view of the composite motorcycle seat cushion 10 of this invention located on the seat I of a conventional "solo" motorcycle 12. Fig. 2 shows the motorcycle seat cushion 10 which includes a removable three piece octagonal shaped cover 13 having a reclosable opening 14 at its larger end 15.

Positioned inside the cover 13 is an air cell pad 16 which includes a base 17, a series of interconnected upstanding air cells 18 and a fill tube assembly 19. This is shown in Fig. 3.

The cover 13 is similar in construction to the cover shown in Robert H. Graebe Patent No. 5,111,544 which is incorporated herein by reference as fully as if it were set out in its entirety.

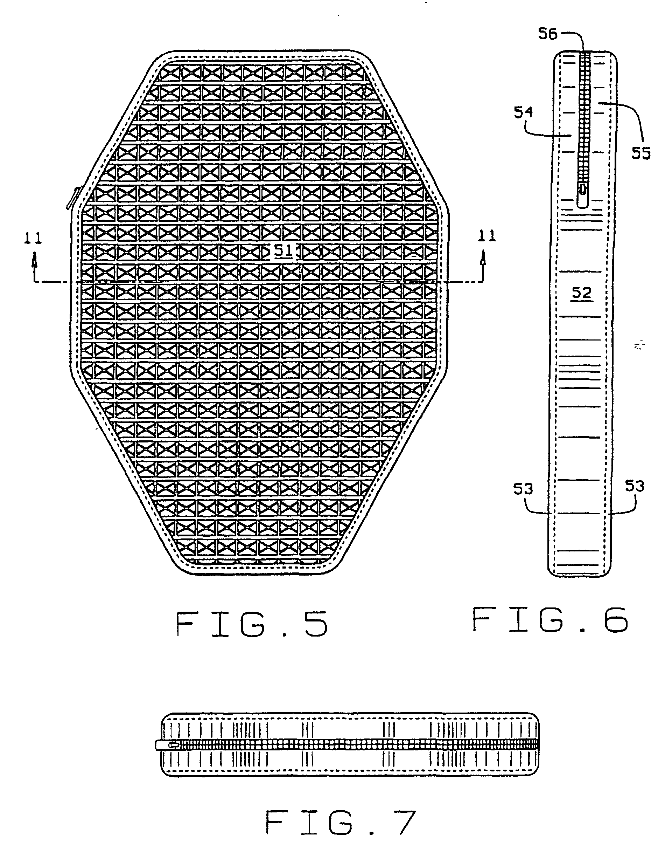

The cellular cushion 16 embodies DRY FLOATATION® technology of ROHO, Inc. and the cells 18 themselves may be of a configuration shown in the air pads described in Graebe Patent Nos. 5,369,828; 4,541,136, etc. The inflatable cushion or module 16 is octagonal in shape and, as shown in Fig. 4, comprises a flexible base sheet 20 which has an octagonal shape and a formed flexible top sheet 21 which has the air cells 18 formed therein. The two sheets 20, 21 are cemented together at preselected areas to form the module 16. The sheets 20, 21 preferably are formed of latex and the top sheet 21 is made by dipping a mandrel into liquid latex. A detailed disclosure of a suitable fabrication process and apparatus is disclosed in Graebe Patent No. 4,541,136 incorporated herein by reference as fully as if set out in its entirety.

The inflatable cellular cushion 16 also may be formed by vacuum or heat forming as set forth in Graebe Patent No. 5,561,875, or by molding in plastic such as polyvinyl chloride (PVC) or polyurethane.

The details of the air cell pad 16 are shown most clearly in Figs. 3, 8-12 and 16. The base 17 is of octagonal shape and comprises a front edge 25 and a longer rear edge 26. Side edges 27, 27a are parallel to each other and perpendicular to the front and rear edges 25, 26. Connecting the rear edge 26 to the side edges 27, 27a are diverging edges 28, 28a. Connecting the side edges 27, 27a to the front edge 25 are converging edges 29, 29a. The edges 28, 28a are shorter than the edges 29, 29a.

The air cells 18 are of pyramidal shape and have a square bottom, rectangular side edges 30, a tapered top formed of four inwardly inclined side walls 31 of substantially trapezoidal shape and a square substantially flat top 32. The purpose of the pyramidal shape is to provide a means to collapse the air cell in a controlled manner during the engagement phase by the person sitting on the points formed by the pyramid. The higher the point, the greater the engagement travel which gradually builds up the internal pressure of the cell giving a low force entry zone. This is useful to prevent bottoming out when the cycle is traveling over rough roads and the rider may bounce on the seat at frequent intervals.

The air cells 18 are spaced from each other by lateral and longitudinal passages and stand independently of each other when erected and filled with air.

The air cells 18 are configured in lateral rows and includes a rear array "R", a middle array "M" and a front array "F". The rear array "R" comprises three rows of cells 18 parallel to the rear edge 26 and spaced along the diverging edges 28, 28a. The rows are of diverging length from four cells 18 adjacent to the rear edge 26 to six cells 18 adjacent to the side edges 27, 27a. The middle array "M" comprises three rows of equal length which contain seven cells 18. The cell rows in the array "M" are parallel to the front and rear edges 25,26 and perpendicular to the side edges 27,27a. The array "M" also is coextensive with the side edges 27, 27a. The front array "F" comprises four rows of cells 18 parallel to the front edge 25 and spaced along the converging edges 29, 29a. The rows vary in length from six cells 18 adjacent to the side edges 27, 27a to three cells 18 adjacent to the front edge 25. This configuration allows the cushion 10 to be positioned on a motorcycle seat with the rear array "R" supporting the user's back, coccyx and ischia, and the center and front arrays "M" and "F" supporting the ischia and trochanters of the user.

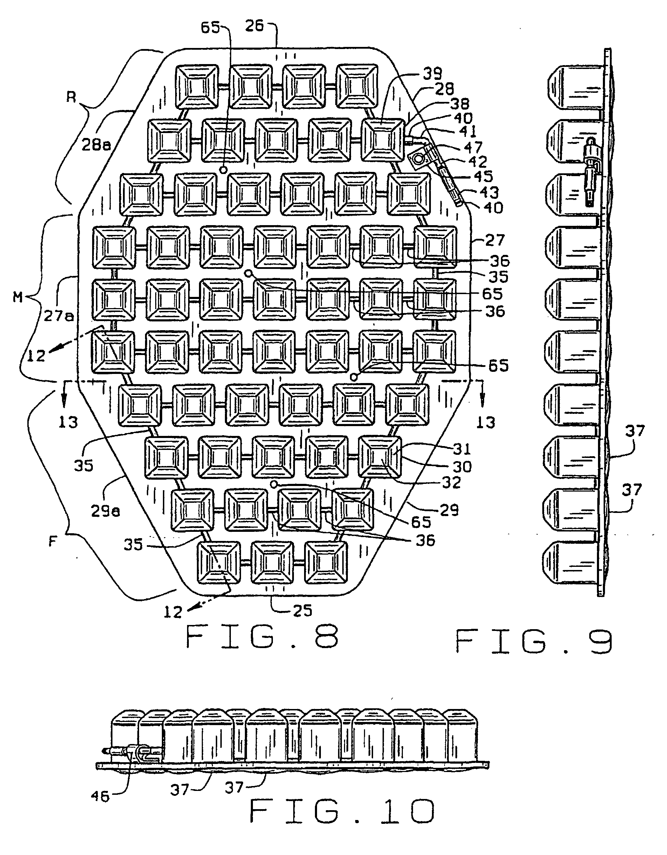

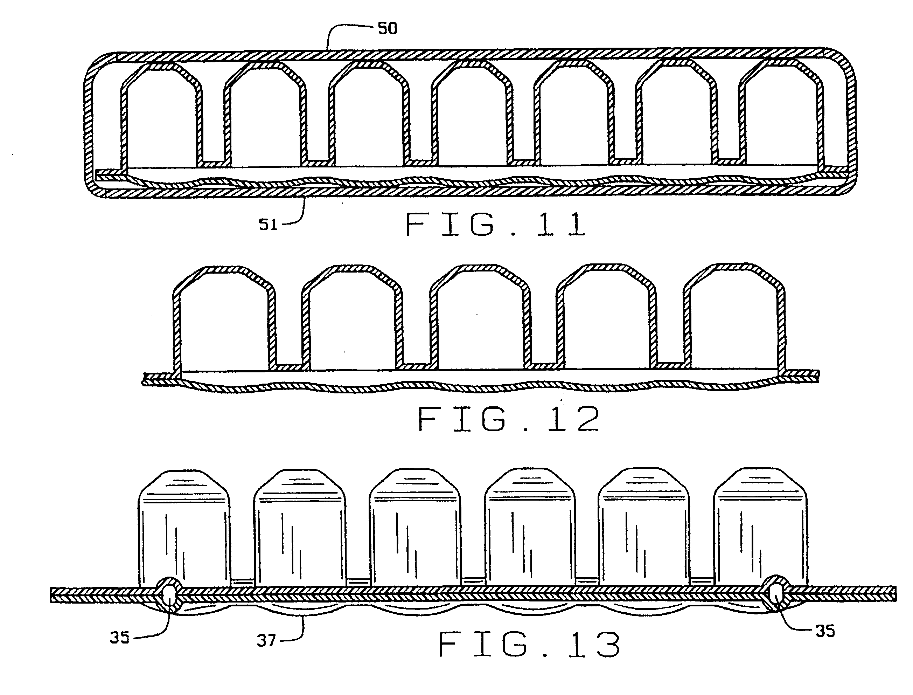

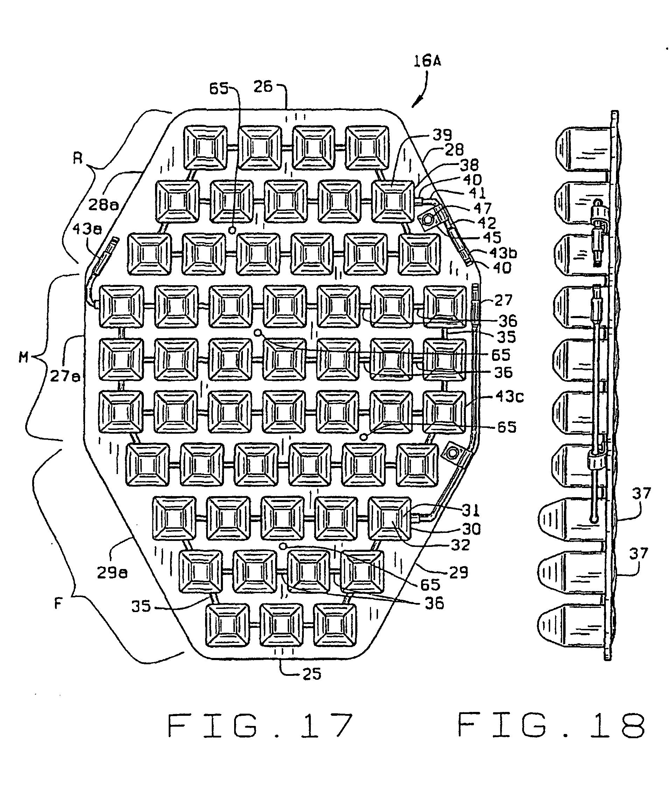

The air cells 18 are interconnected pneumatically by a series of air passages in the base 17. The air passages include a first peripheral or circumferential series of passages 35 which connect the air cells 18 that are around the periphery of the air cell pad 16 (Figs. 8, 12 and 16), and a second lateral or transverse series of passages 36 which extend from side to side parallel to the front and rear edges 25, 26 and connect the air cells 18 in each row (Figs. 8, 11 and 16). Thus all of the air cells 18 are interconnected pneumatically. An alternative construction is to eliminate two or more of the air passages 35 to form separate air chambers each of which would be provided with a fill tube assembly 19 (Figs 17,18). A further modification is to provide a manifold type on-off valve arrangement as shown in Graebe Patent Nos. 5,163,196 and 5,502,855. The areas of the base 17 between the air cells 18 are cemented together (Fig. 13). The end result is that the areas of the bottom sheet 20 that form the bases 37 of the cells 18 tend to bulge outwardly or downwardly (Figs. 9, 10, 13) when air is in the cells 18 and when the cushion is not on a smooth surface.

Another feature of the air cell pad 16 is the fill tube assembly 19 which is connected to the outside side wall 38 of the outermost air cell 39 in the second row of air cells in the rear array "R". An outwardly projecting cylindrical sleeve 40 is molded into the air cell wall 38 and one end of a relatively stiff tubular member 41 is cemented into the sleeve 40. The tubular member 41 has an angularly inclined leg portion 42 designed to parallel the base edge 28. Connected to the end of the leg 42 is a fill nozzle 43 having a rotatable on-off valve 44. A hold down member 45 forms a loop 46 through which the leg 42 is loosely positioned (Fig. 10). The hold down member 45 is fastened to the air pad base 17 by a rivet 47 or other suitable fastener. The purpose of the retainer 45 is to position the nozzle 43 so that it is accessible to the user through the cover opening 14. The cover 13, as mentioned, contains subject matter in common with Graebe U.S. Patent No. 5,111,544.

The flexibility of the base 17 allows it to fit over and conform to the often irregular shape of motorcycle seats, autos, truck or boat seats and saddles.

The cover 13 fits over the seating surface formed by the dome-shaped ends of the cells 18, and also along the sides of the peripheral cells and under the base 17, generally encapsulating the pad 16. Yet, it does not impair the effectiveness of the pad 16, for the ends of the cells 18 are easily displaced toward the base to conform to the shape of the user's buttocks and the base 17 can conform to the shape of the motorcycle seat 11 or other seating surface to which it is applied. Moreover, the cover 13 is easily stripped from the pad 16 to enable the two to be cleaned separately.

The cover 13 includes a top panel 50, a bottom panel 51 and a side panel 52 which extends between and is joined to the top and bottom panels 50 and 52 along stitch lines 53. Both the top and bottom panels 50 and 51 are octagonal in shape, and that shape matches the shape of the pad base 17. The side panel 52 is of a height that generally corresponds to the height of the cells 18 when they are fully extended. The stitch lines 53 connecting the lower panel 51 and the upper panel 50 to the side panel 52 extend along the full periphery of the cover and are continuous in the sense that no interruptions exist in the seam that they form. The side panel 52 is severed into two sections 54, 55 for a portion of its length around the rear edge 26 and the diverging edges 28, 28a. The sections 54, 55 carry a zipper 56 which normally joins them together as one.

The top panel 50 preferably is formed from a highly elastic and porous fabric, i.e., one that stretches in any direction. The elasticity of the top panel 50 enables that panel to conform to the shape of the user's buttocks when the user sits upon the cushion 10. The top panel 50 simply follows the contour of the seating surface created by the cells 18 and imposes minimum shear on the user's skin. It detracts little from the capacity of the array of air cells 18 to conform to the shape of the user's buttocks. The top panel 50 is porous to vent away moisture. Plastic sheet material for the top panel 50 that has limited elasticity may be used when very good vapor permeability is desired, e.g., when limited cooling is desired.

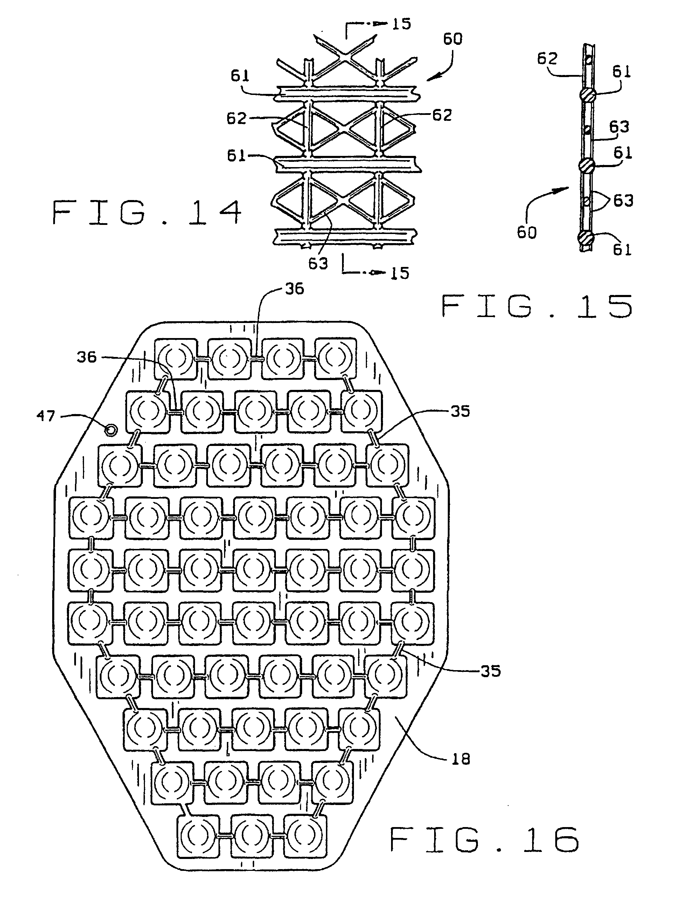

The bottom panel 51, on the other hand, is formed from a high friction material, such as the illustrated high friction mesh 60 (Figs. 13 and 14) known as vinyl coated scrim. The mesh 60 consists of polyester fibers woven into an open weave and a polyvinyl chloride coating covering the polyester fibers without obliterating the openings of the weave. The weave is such that the mesh 60 has relatively thick ribs 61 extending parallel between opposite edges of the panel 50 and thinner connecting segments 62 extending between the ribs 61 and oriented at right angles with respect to the ribs 61, with the spacing between the connecting segments 62 being about the same as the spacing between the ribs 61. This forms a pattern of square openings, which are divided by diagonal segments 63 that extend between the connecting segments 62, and cross at the centers ofthe square openings. The coating has a high coefficient of friction against traditional seating and saddle surfaces such as leather, vinyl, wood, metal or fabric, and the friction that develops is particularly effective along the thick ribs 61. The coefficient of friction between the coating and such surfaces is substantially greater than the coefficients of friction between the upper and side panels 50 and 52 and such surfaces. The mesh 60 is commonly used as an underlayment for throw rugs to prevent them from slipping on traditional flooring materials such as tile, vinyl and hardwood. It may be obtained from Vantage Industries, Inc., of Atlanta, Ga., or other suitable sources The high friction mesh 60 of the bottom panel 51 prevents the cover, and the cushion over which it fits, from sliding around the motorcycle seat 11. In addition, it admits air to the interior of the cover 13 where the air can circulate through the array of air cells 18. Finally, it permits moisture to drain from the interior of the cover 13, when drain holes 65 are provided in the base 17 of the cushion between the cells 18.

The bottom panel 51 also may have other mesh patterns and may even be a solid sheet of neoprene rubber or the like which would make the cushion warmer for cold weather use.

The side panels 52 are formed from a more traditional fabric, i.e., one that has considerable flexibility, yet does not stretch easily. Typical nylon fabric is suited for this purpose.

Figs 17 and 18 illustrate a modification of the invention in which the air cell pad 16A is divided into compartments "A", "B" and "C". In the embodiment shown, the rear array "R" and the middle array "M" and the adjacent row of cells in the front array are all at about the same inflation even though the middle array "M" and the rear array "R" are separated and inflatable through separate nozzles designated by the numerals 43a and 43b. The front array "F" also is separated from the other two and is more highly inflated so that the air cells 18 are distended outwardly and upwardly (Fig. 18). The fill nozzle 43c is used to fill the cells in the front array "F". In use, when the cell pad 16A is placed on a motor angle seat, the raised front cells "F" tend to engage the user if the cycle stops suddenly and to hold and restrain the user from sliding off the seat. This adds to the safety of the cushion 10. Other combinations of air cell sections can be used depending on the result desired.

In view of the above, it will be seen that the several objects and advantages of the present invention have been achieved and other advantageous results have been obtained.

As various changes could be made in the above constructions without departing from the scope of the invention, it is intended that all matter contained in the above description or shown in the accompanying drawings shall be interpreted as illustrative and not in a limiting sense.

## Claims

1. A motor cycle seat cushion (10) comprising:
a) a flexible modular air cell pad (16) having a flexible base (17) and a series of upstanding air cells (18) having side walls (31) and a top surface (32), the air cells (18) having flexible generally vertical side walls (31) sealed to the bottom wall, each of said air cells (18) being substantially fiusto-pyramidal in shape, and having a substantially rectangularly shaped lower section defined by said flexible generally vertical side walls, and a frusto-pyramidal tapered upper section formed from side panels connected to the vertical side walls, the vertical side walls (31) of adjacent cells (18) being separated and spaced apart to define lateral and longitudinal paths and being independently upstanding when inflated, said air cells being formed in lateral transverse rows, some of the rows having a different number of air cells from other of the rows, at least some of the air cells being pneumatically interconnected, and
(b) a cover (13) comprising:
(1) a top panel (50) located over the upper ends of the cells and being formed from an elastic fabric;
(2) a bottom panel (51) located under the base (17) and covering substantially the entire base, said bottom panel being formed from a material with a higher coefficient of friction than top panel (50) or side panel (52); and
(3) a side panel (52) located between and connected to the top and bottom panels (50, 51) at the peripheral margins of the top and bottom panel, said side panel being formed from a flexible fabric, a portion of the side panel being divided into sections (54, 55) which are normally joined, but which may be detached to permit the cover (13) to be removed from or fitted over the pad (16).

2. The motor cycle seat cushion of claim 1 having an octagonal shape with one end (R) being wider than the other (F).

3. The motor cycle seat cushion of claim 1 wherein the air cells (18) have substantially square flexible lower sections and the upper sections have substantially trapezoidal panels with substantially flat top areas.

4. The motor cycle seat cushion of claim 1 wherein the cells (18) are all interconnected pneumatically through passages (35, 36) in the flexible base (17).

5. The motor cycle seat cushion of claim 4 including air passages (35) in the base (17) connecting the cells around the periphery of the base (17) and lateral air passages (36) connecting the cells in each transverse row.

6. The motor cycle seat cushion of claim 1 including at least one air fill assembly (19) connected to the side wall of a peripheral cell.

7. The motor cycle seat cushion of claim 6 wherein the air fill assembly (19) includes a fill tube (40, 41) positioned within the periphery (38) of the pad base (17) and parallel to one edge and having an on-off valve (44) on the free end.

8. The motor cycle seat cushion of claim 7 wherein the free end (43) of the fill tube is adjacent to the detachable side panel sections (54, 55) to provide the user of the cushion access to the fill tube.

9. The motor cycle seat cushion of claim 2 wherein the air cell pad (16) has a rear array ("R"), a middle array ("M"), and a front array ("F") of cells, with the number of cells in the rear array being less than the number of cells in the front array, and there being less cells in the outermost row of cells in the front array than in the outermost row of cells in the rear array.

10. The motor cycle seat cushion of claim 1 wherein the cover bottom (51) is a high friction mesh (60).

11. The motor cycle seat cushion of claim 10 wherein the high friction mesh (60) is flexible and has parallel ribs (61) with thinner connecting segments (62) extended between the ribs.

12. The motor cycle seat cushion of claim 1 wherein the side panel (52) is formed from a highly flexible but substantially non-elastic fabric.

13. The motor cycle seat cushion of claim 1 wherein the air cell pad (16) has drain holes (65) in its base (17).

14. The motor cycle seat cushion of claim 8 including a tie down (45, 46) positioned around the air fill tube (41) and anchored to the base (17) of the pad to hold the air fill tube and nozzle in a position where it is accessible by the user of the cushion through the side wall panel segments (54, 55).

15. The motor cycle seat cushion of claim 11 wherein the bottom panel (51) of the cover (13) is coated with polyvinyl chloride.

16. The motor cycle seat cushion of claim 1 wherein the side panel sections (54, 55) of the cover (13) are joined by a zipper arrangement (56).

17. The motor cycle seat cushion of claim 1 wherein the flexible base (17) of the air cell pad (16) and the cover (13) allow the cushion to conform to and be retained on irregular seats and saddle surfaces.

18. The motor cycle seat cushion of claim 1 wherein the flexible modular air cell pad (16) has a flexible base (17) of irregular shape, and the air cells (18) are divided into arrays ("R", "M", "F") with the cells (18) in each array being pneumatically interconnected, whereby each array can be inflated to a different degree than the other arrays.

19. The motor cycle seat cushion of claim 18 wherein the air cell pad base (17) and the cover (13) each have an octagonal shape with one end (R) being wider than the other (F), the smaller end (F) having a separate array ("F") of air cells located toward the front of the surface on which the cushion is located whereby it can have a greater inflation to retard forward movement of the user of the cushion.

## Patentansprüche

1. Ein Motorradsitzkissen (10), umfassend:
a) ein flexibles modulares Luftzellenpolster (16) mit einer flexiblen Basis (17) und einer Serie aufrechtstehender Luftzellen (18) mit Seitenwänden (31) und einer oberen Fläche (32), wobei die Luftzellen (18) flexible, im allgemeinen vertikale Seitenwände (31) aufweisen, die an der unteren Wand angeschlossen sind, wobei jede der besagten Luftzellen (18) im Wesentlichen stumpfkegelförmig ist und einen im Wesentlichen rechteckig geformten unteren Abschnitt aufweist, der durch besagte flexible, im allgemeinen vertikale Seitenwände definiert ist, und einen stumpfkegelförmigen, verjüngten oberen Abschnitt, der aus mit den vertikalen Seitenwänden verbundenen Seitenpaneelen gebildet ist, wobei die vertikalen Seitenwände (31) benachbarter Zellen (18) voneinander getrennt und mit Zwischenräumen versehen sind, um seitwärts- und längsgerichtete Pfade zu bilden und in aufgeblasenem Zustand unabhängig aufrechtstehend zu sein, wobei besagte Luftzellen in seitwärts gerichteten Querreihen ausgebildet sind, wobei manche der Reihen eine Anzahl von Luftzellen aufweisen, die sich von der anderer Reihen unterscheidet, wobei zumindest einige der Luftzellen pneumatisch miteinander verbunden sind, und
b) einen Bezug (13), umfassend:
(1) ein oberes Paneel (50), das sich über den oberen Enden der Zellen befindet und aus einem elastischen Stoff geformt ist;
(2) ein Bodenpaneel (51), das sich unter der Basis (17) befindet und im Wesentlichen die gesamte Basis bedeckt, wobei besagtes unteres Paneel aus einem Material mit einem höheren Reibungskoeffizienten als das obere Paneel (50) oder das Seitenpaneel (52) gebildet ist; und
(3) ein Seitenpaneel (52), das sich zwischen dem oberen und dem Bodenpaneel (50,51) befindet und an den Außenrändern des oberen und des Bodenpaneels damit verbunden ist, wobei besagtes Seitenpaneel aus einem flexiblen Stoff geformt ist, wobei ein Teilbereich des Seitenpaneels in Abschnitte (54,55) aufgeteilt ist, die normalerweise miteinander verbunden sind, die jedoch abgenommen werden können, um das Abnehmen des Bezugs (13) vom Polster (16) bzw. dessen Anbringen darüber zu gestatten.

2. Das Motorradsitzkissen von Anspruch 1, das eine achteckige Form hat, wobei ein Ende (R) breiter als das andere (F) ist.

3. Das Motorradsitzkissen von Anspruch 1, wobei die Luftzellen (18) im Wesentlichen quadratische flexible untere Abschnitte haben und die oberen Abschnitte im Wesentlichen trapezförmige Paneele mit im Wesentlichen flachen oberen Bereichen aufweisen.

4. Das Motorradsitzkissen von Anspruch 1, wobei die Zellen (18) alle durch Durchlässe (35, 36) in der flexiblen Basis (17) pneumatisch miteinander verbunden sind.

5. Das Motorradsitzkissen von Anspruch 4, das Luftdurchlässe (35) in der Basis (17) enthält, die die Zellen um den Umfang der Basis (17) herum verbinden, und seitlicher Luftdurchlässe (36), die die Zellen in jeder Querreihe verbinden.

6. Das Motorradsitzkissen von Anspruch 1, das zumindest einer Luftfülleinheit (19) enthält, die mit der Seitenwand einer Randzelle verbunden ist.

7. Das Motorradsitzkissen von Anspruch 6, wobei die Luftfülleinheit (19) einen Füllschlauch (40,41) umfasst, der innerhalb des Umfangs (38) der Polsterbasis (17) und parallel zu einer Kante gelegen ist und ein Ein-Aus-Ventil (44) am freien Ende besitzt.

8. Das Motorradsitzkissen von Anspruch 7, wobei das freie Ende (43) des Füllschlauchs den abnehmbaren Seitenpaneelabschnitten (54,55) benachbart ist, um dem Benutzer des Kissens Zugang zu dem Füllschlauch zu verschaffen.

9. Das Motorradsitzkissen von Anspruch 2, wobei das Luftzellenkissen (16) eine hintere Anordnung ("R"), eine mittlere Anordnung ("M") und eine vordere Anordnung ("F") von Zellen aufweist, wobei die Anzahl von Zellen in der hinteren Anordnung kleiner ist als die Anzahl von Zellen in der vorderen Anordnung, und wobei sich weniger Zellen in der äußersten Reihe von Zellen in der vorderen Anordnung befinden als in der äußersten Reihe von Zellen in der hinteren Anordnung.

10. Das Motorradsitzkissen von Anspruch 1, wobei der Boden (51) des Bezugs ein Gitter (60) mit hoher Reibung ist.

11. Das Motorradsitzkissen von Anspruch 10, wobei das Gitter (60) mit hoher Reibung flexibel ist und parallele Rippen (61) besitzt, wobei sich dünnere Verbindungssegmente (62) zwischen den Rippen erstrecken.

12. Das Motorradsitzkissen von Anspruch 1, wobei das Seitenpaneel (52) aus einem hochflexiblen, jedoch im Wesentlichen nichtelastischen Stoff ausgebildet ist.

13. Das Motorradsitzkissen von Anspruch 1, wobei das Luftzellenpolster (16) Abfuhröffnungen (65) in seiner Basis aufweist.

14. Das Motorradsitzkissen von Anspruch 8, das ein Halteband (45,46) enthält, das um den Luftfüllschlauch (41) herum angebracht ist und an der Basis (17) des Polsters verankert ist, um Luftfüllschlauch und Mundstück in einer Position zu halten, wo es dem Benutzer des Kissens durch die Seitenwandpaneelsegmente (54,55) zugänglich ist.

15. Das Motorradsitzkissen von Anspruch 11, wobei das Bodenpaneel (51) des Bezugs (13) mit Polyvinylchlorid beschichtet ist.

16. Das Motorradsitzkissen von Anspruch 1, wobei die Seitenpaneelabschnitte (54,55) des Bezugs (13) mittels einer Reißverschlussanordnung (56) miteinander verbunden sind.

17. Das Motorradsitzkissen von Anspruch 1, wobei die flexible Basis (17) des Luftzellenpolsters (16) und der Bezug (13) das Anpassen des Kissens an und sein Festgehaltenwerden auf unregelmäßigen Sitzen und Sattelflächen gestattet.

18. Das Motorradsitzkissen von Anspruch 1, wobei das flexible modulare Luftzellenpolster (16) eine flexible Basis (17) von unregelmäßiger Form hat und die Luftzellen (18) in Anordnungen ("R", "M", "F") aufgeteilt sind, wobei die Zellen (18) in jeder Anordnung pneumatisch miteinander verbunden sind, wobei jede Anordnung in Bezug zu den anderen Anordnungen in unterschiedlichem Grad aufgeblasen werden kann.

19. Das Motorradsitzkissen von Anspruch 18, wobei die Luftzellenpolsterbasis (17) und der Bezug (13) jeweils eine achteckige Form haben, wobei ein Ende (R) breiter ist als das andere (F), wobei das kleinere Ende (F) eine getrennte Anordnung ("F") von Luftzellen aufweist, die zur Vorderseite der Oberfläche hin gelegen sind, auf der sich das Kissen befindet, wodurch es mehr aufgeblasen werden kann, um die Vorwärtsbewegung des Benutzers des Kissens zu verzögern.

## Revendications

1. Coussin pour siège de moto (10) comprenant :
a) un matelas modulaire flexible (16) contenant des cellules à réserve d'air, possédant une base flexible (17) et une série de cellules dressées à réserve d'air (18) comportant des parois latérales (31) et une surface supérieure (32), les cellules à réserve d'air (18) possédant des parois latérales flexibles (31) généralement verticales fixées de manière étanche à la paroi inférieure, chacune desdites cellules à réserve d'air (18) possédant une configuration essentiellement tronconique et possédant une section inférieure de configuration essentiellement rectangulaire définie par lesdites parois latérales flexibles généralement verticales et une section supérieure de configuration tronconique formée à partir des panneaux latéraux reliés aux parois latérales verticales, les parois latérales verticales (31) de cellules adjacentes (18) étant séparées et espacées les unes des autres pour définir des voies latérales et longitudinales et prenant une forme dressée de manière indépendante à l'état gonflé, lesdites cellules étant réalisées pour former des rangées transversales latérales, un certain nombre des rangées possédant un nombre de cellules à réserve d'air différent de celui d'autres rangées, au moins un certain nombre des cellules à réserve d'air étant soumises à une interconnexion pneumatique, et
(b) un recouvrement (13) comprenant :
(1) un panneau supérieur (50) disposé pardessus les extrémités supérieures des cellules et étant réalisé à partir d'un tissu élastique ;
(2) un panneau inférieur (51) disposé en dessous de la base (17) et recouvrant essentiellement la totalité de la base, ledit panneau inférieur étant réalisé en un matériau dont le coefficient de friction est supérieur à celui du panneau supérieur (50) ou du panneau latéral (52) ; et
(3) un panneau latéral (52) disposé entre les panneaux supérieurs et inférieurs (50, 51) et relié à ces derniers aux bords périphériques des panneaux supérieur et inférieur, ledit panneau latéral étant réalisé à partir d'un tissu flexible, une portion du panneau latéral étant subdivisée en sections (54, 55) qui sont normalement jointes, mais qui peuvent être détachées pour permettre le retrait du recouvrement (13) du matelas (16) ou le placement dudit recouvrement sur ledit matelas.

2. Coussin pour siège de moto selon la revendication 1, possédant une configuration octogonale, l'extrémité (R) étant plus large que l'extrémité (F).

3. Coussin pour siège de moto selon la revendication 1, dans lequel les cellules (18) à réserve d'air possèdent des sections inférieures flexibles essentiellement carrées, les sections supérieures possédant des panneaux de forme essentiellement trapézoïdale comportant des zones supérieures essentiellement plates.

4. Coussin pour siège de moto selon la revendication 1, dans lequel les cellules (18) à réserve d'air sont toutes soumises à une interconnexion pneumatique via des passages (35, 36) pratiqués dans la base flexible (17).

5. Coussin pour siège de moto selon la revendication 4, englobant des passages pour l'air (35) dans la base (17) reliant les cellules autour de la périphérie de la base et des passages latéraux pour l'air (36) reliant les cellules dans chaque rangée transversale.

6. Coussin pour siège de moto selon la revendication 1, englobant au moins un assemblage de remplissage d'air (19) relié à la paroi latérale d'une cellule périphérique.

7. Coussin pour siège de moto selon la revendication 6, l'assemblage de remplissage d'air (19) englobe un tube de remplissage (40, 41) positionné à l'intérieur de la périphérie (38) de la base (17) du matelas et parallèlement à un bord, et possédant une soupape d'ouverture/fermeture (44) à son extrémité libre.

8. Coussin pour siège de moto selon la revendication 7, dans lequel l'extrémité libre (43) du tube de remplissage est disposée en position adjacente aux sections détachables du panneau latéral (54, 55) pour permettre à l'utilisateur du coussin d'accéder au tube de remplissage.

9. Coussin pour siège de moto selon la revendication 2, dans lequel le matelas (16) contenant des cellules à réserve d'air possède un réseau dorsal ("R"), un réseau médian ("M") et un réseau frontal ("F") de cellules, le nombre de cellules dans le réseau dorsal étant inférieur au nombre de cellules dans le réseau frontal et le nombre de cellules dans la rangée de cellules situées le plus à l'extérieur dans le réseau frontal est inférieur au nombre de cellules dans la rangée de cellules situées le plus à l'extérieur dans le réseau dorsal.

10. Coussin pour siège de moto selon la revendication 1, dans lequel la partie inférieure du recouvrement (51) est constituée d'un réseau à mailles (60) à coefficient de friction élevé.

11. Coussin pour siège de moto selon la revendication 10, dans lequel le réseau à mailles (60) à coefficient de friction élevé est flexible et possède des nervures parallèles (61), des segments de connexion plus minces (62) s'étendant entre les nervures.

12. Coussin pour siège de moto selon la revendication 1, dans lequel le panneau latéral (52) est réalisé à partir d'un tissu très flexible, mais essentiellement non élastique.

13. Coussin pour siège de moto selon la revendication 1, dans lequel le matelas (16) contenant des cellules à réserve d'air possède des trous de drainage (65) pratiqués dans sa base (17).

14. Coussin pour siège de moto selon la revendication 8, englobant une attache par liage (45, 46) positionnée autour du tube de remplissage d'air (41) et ancrée à la base (17) du matelas pour maintenir le tube de remplissage d'air et la buse dans une position dans laquelle ils restent accessibles à l'utilisateur du coussin à travers les segments (54, 55) du panneau de paroi latérale.

15. Coussin pour siège de moto selon la revendication 11, dans lequel le panneau inférieur (51) du recouvrement (13) est recouvert de chlorure de polyvinyle.

16. Coussin pour siège de moto selon la revendication 1, dans lequel les sections (54, 55) du recouvrement (13) du panneau latéral sont jointes par un arrangement (56) du type à fermeture éclair.

17. Coussin pour siège de moto selon la revendication 1, dans lequel la base flexible (17) du matelas (16) contenant des cellules à réserve d'air et le recouvrement (13) permettent au coussin d'épouser la forme irrégulière des surfaces des sièges et des selles et de se maintenir sur lesdites surfaces.

18. Coussin pour siège de moto selon la revendication 1, dans lequel le matelas modulaire flexible (16) contenant des cellules à réserve d'air possède une base flexible (17) de forme irrégulière et les cellules 18 à réserve d'air sont subdivisées en réseaux ("R", "M", "F"), les cellules (18) dans chaque réseau étant soumises à une interconnexion pneumatique, chaque réseau étant gonflé jusqu'à un degré différent de celui des autres réseaux.

19. Coussin pour siège de moto selon la revendication 18, dans lequel la base 17 du matelas contenant des cellules à réserve d'air et le recouvrement 13 possède chacun une configuration octogonale dont l'extrémité (R) est plus large que l'extrémité (F), l'extrémité plus petite (F) possédant un réseau séparé ("F") de cellules à réserve d'air, disposé en direction de l'avant de la surface sur laquelle est placé le coussin, de telle sorte qu'il peut disposer d'un gonflement supérieur pour retarder le mouvement vers l'avant de l'utilisateur du coussin.
